# EUROPEAN PATENT APPLICATION

(11) **EP 2 679 561 A2**
(43) Date of publication of application: **01.01.2014**
(21) Application number: 13398008.6
(22) Date of filing: 24.06.2013
(51) Int. Cl.: C04B 28/04

(54) **Portland cement, wood particles and light weight aggregates-based composite panel, reinforced with polyvinyl alcohol fibers**

(30) Priority: 25.06.2012 PT 2012106403
(71) Applicant: Secil S.A. - Companhia Geral De Cal e Cimento, S.A., 2901-864 Setubal (PT)
(72) Inventor: Jesus De Sequeira Serra Nunes, Angela Maria, 2925-181 Azeitão (PT)
(74) Representative: Pereira da Cruz, Joao

(57) **Abstract**

This invention relates to a composite panel of flat surfaces and small thickness (4 to 40 mm), which is grey, white or coloured, resistant, rigid and has high performances in terms of resistance to impact, fire, humidity, temperature variation, noise and fungi, as well as to other microorganisms, along with its inherent architectural versatility, comprised by 20 to 50% of white or grey Portland cement; 5 to 50% of debarked resinous wood particles; 0.1 to 10% of a surface accelerator; 0.1 to 20% of aluminium sulphate solution; 2 to 50% of limestone filler; 0.5 to 20% of PVA fibers; 0.1 to 50% of light weight aggregates; and optionally 0.1 to 15% of inorganic pigments. The combination between the resistance and flexibility provided by the wood and the polyvinyl alcohol (PVA) fibers, and the durability and rigidity provided by the cement allows a large scope of applications, both in outer and inner spaces, on public or residential buildings, making it an inexpensive and easy solution to apply.

## Description

### Field of the Invention

This invention is within the field of building materials based on cement, wood and PVA fibers and light weight aggregates, with a profile providing high durability, safety, comfort and economy, and a wide variety of applications from pavements, ceilings, roofings, to coating and isolation of façades, and the like.

### Background of the invention

The use of panels in wood-based building works is widely spread and diversified, however, their recognized advantages, in particular a high bending strength, such as in the case of plywood, medium density fiberboards (MDF) or particle boards (OSB), are conditioned by a lower performance as regards reaction to fire, water resistance and dimensional stability, and sometimes also as regards attacks from fungi, insects and microorganisms.

On the other hand, and although filling the gaps associated to wood panels, the cement based panels are generally too dense or do not have the comparable bending strength values capable of coping with the solicited stress.

Except for the cement panels reinforced with PVA fibers and comprised of low density fillers and glass microspheres, as disclosed in the patent US 7,732,032 B2, whose fibers offer performances which are equivalent to the ones of wood panels as regards the bending strength, there are no panels having this high level of versatility and applicability in roofings, walls, ceilings or pavements, with structural demands.

There are several cases in which fibers of different natures are used, such as cement-based matrix composite, for the purpose of reinforcing the bending strength, without the use of wood.

The patents US 4,199,366, US 4,306,911, US 4,339,273, US 5,298,071, US 6, 528, 151 and US 6,723,162 B1, disclose formulations and methods for the preparation and use of PVA fibers, in some cases by mixing with other polymeric organic fibers, to be used on the cement matrix and/or other pozzolanic or hydraulic binders. In all cases, the results are high density products, such as in the patent US 10/666,294, which discloses a process for obtaining multi-layer structural cement panels (SCP) with the addition of PVA fibers over each pre-mixed layer.

In particular, the patent US 7,732,032 B2 discloses the formulation for the production of cement panels reinforced with PVA fibers, comprising Portland cement, PVA fibers carefully selected in terms of their characteristics, low density fillers (such as, for instance, glass microspheres, ceramic microspheres and/or perlite) and water-reducing superplasticizers (for example, polynaphthalenes, polyacrylates, etc.), with the particularity that they have densities ranging from 961 to 1361 kg/m³, which are significantly lower than those of the typical cement panels, in addition to a high performance as regards bending strengths. Anyway, the said formulation does not include the use of wood, which is a renewable and highly sustainable material.

### Summary of the Invention

The advantage of this invention relates to the fact that it allows a light panel to be formulated, which is easy to apply and shows a generally good performance in what concerns its fire, thermal and acoustic behaviour, as well as resistance to impact, tensile and bending strength, resistance to humidity, stability from the dimensional point of view, resistance to fungi, insects and microorganisms, also being economically competitive. Considering all of these characteristics, it can be used in a wide variety of domains, inclusively with structural and architectural functions.

This invention allows to overcoming the issues of dimensional stability of the typical panel comprised of wood fiber only, when subject to hygrometric variations, thus reinforcing its mechanical characteristics, namely tensile and bending strength, high ductility associated to high durability, which provides it with a large versatility of application, thanks to its low density ranging from 1000 to 1400 kg/m3.

On the other hand, light weight aggregates (glass microspheres) can be added to the panel's composition, which will give it a better performance as regards thermal properties, the panel thus having an active role in what concerns thermal isolation, namely when it is used in walls and ceilings.

Finally, the possibility of having colour and finishing similar to a demoulded concrete surface, makes it a very interesting solution to be applied from the architectural point of view.

### Detailed Description of the Invention

The use of the composition according to the invention for the manufacture of the panel has enabled to reach a minimum bending strength of 9 N/mm². On the other hand, the use of glass microspheres was aimed both at reducing the weight of the panel to values ranging from 1000 to 1400 kg/m³, and improving its thermal behaviour (K=0.1 to 0.23 W/m².K). Reference shall also be made to the improvement obtained in terms of resistance to airborne sounds from 31 to 37 dB and sound absorption coefficient α=0,10 to frequencies from 250 to 500 Hz).

Answering to the desired architectural effect, the binders used are white or grey Portland cements in compliance with the provisions of EN 197-1 and presenting fast-developing strengths.

The filler shall be of calcareous origin and be finely ground to a granulometry lower than 125 µm. It must be clean, free from clays and other contamination sources. The colour stability of these materials is of primary importance, otherwise the panels will not have the desired homogeneity index. So it is essential to control the colorimetric characteristics of this product.

### Object of the invention

The object of the invention relates to a low density and high performance composite panel, made from Portland cement, wood particles and light weight aggregates and reinforced with polyvinyl alcohol fibers, which comprises, in volumetric percentage (dry materials) the following composition:
(a) 20 to 50% of white or grey Portland cement;
(b) 5 to 50% of debarked resinous wood particles;
(c) 0.1 to 10% of a surface accelerator;
(d) 0.1 to 20% of aluminium sulphate solution;
(e) 2 to 50% of limestone filler;
(f) 0.5 to 20% of PVA fibers;
(g) 0.1 to 50% of light weight aggregates; and, optionally,
(h) 0.1 to 15% of inorganic pigments.

The component (a) is normally included in a volumetric percentage ranging from 25 to 35%, preferably 29%.

Preferably, the component (b) is included in a volumetric percentage ranging from 10 to 25%, more preferably 17%.

Usually, the component (b) is in the form of chips with a thickness ranging from 0.25 to 0.32 mm.

Preferably, 50 to 70% of wood chips, more preferably 2/3, have a length < 1 mm and 46 to 26% of the wood chips, more preferably 1/3, have a length from 1 to 4 mm. The percentage of wood chips having a length higher than 4 mm shall be of about 0%.

Preferably, the wood chips are from pinewood.

The most preferred component (c) is sodium silicate solution with a density from 1.10 to 1.15 g/cm³, preferably 1.13, and a SiO₂/Na₂O ratio from 3.19 to 3.53.

Preferably, the component (d) has a density from 1.05 to 1.10 g/cm³, more preferably 1.07 g/cm³.

The component (e) generally has a granulometry lower than 125 µm and a carbonate content higher than 92%.

The component (f) is usually comprised of PVA fibers having a diameter from 26 to 660 µm and a length from 6 to 30 mm, preferably from 12 to 18 mm, with a preferred volumetric dosage from 1 to 5% of the dry material.

In a preferred embodiment of the invention, the component (g) is comprised of glass microspheres with a diameter ranging from 30 to 65 µm, preferably from 30 to 45, density from 0.125 to 0.60 g/cm³, preferably from 0.30 e 0,50 g/cm³, thermal conductivity from 0.044 to 0.187 W/m.°K and an air volume/sphere volume ratio from 0.76 to 0.95, in a preferred volumetric dosage from 25 to 45% of the total dry volume.

If applicable, the component (h) is usually comprised of metal oxide pigments in a variable dosage depending on the desired colour.

The composite panels according to the invention are characterized in that they have a low-density ranging from 1000 to 1400 kg/m3 and a good performance as regards the mechanical strengths, namely tensile strength under bending > 9 N/mm², tensile strength perpendicular to the plane > 0,5 N/mm² and elasticity modulus > 4000 N/mm².

In addition to this, the said composite panels have a low thermal conductivity of 0.10 < x < 0.23 W/m². K and their fire resistance is rated Class A in compliance with ASTM E 136 and Class A2 in compliance with EN 13501-1.

### Experimental part

The wood chips used, which can be from pinewood, are broken and thinned to the following dimensions:

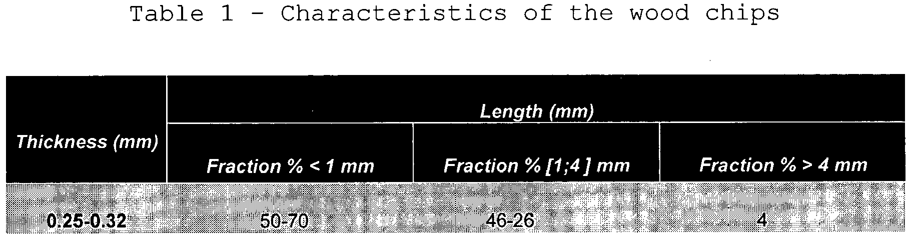

The use of sulphate of the aluminium type Al₂(SO₄)₃.nH₂O in a solution with a density ranging from 1.05 to 1,10 g/cm³ (1.07) allows the larger chips to be defibrillated, and the use of sodium silicate Na₂O.nSiO₂ with a SiO₂/Na₂O ratio = 3.19 to 3.53 in a solution with a density ranging from 1.10 to 1.15 g/cm³, will help both as regards the acceleration of the mixture's setting time and the mineralization of the wood chips.

The PVA fibers to be used shall have the following characteristics, in order to satisfy the requirements of the panel:

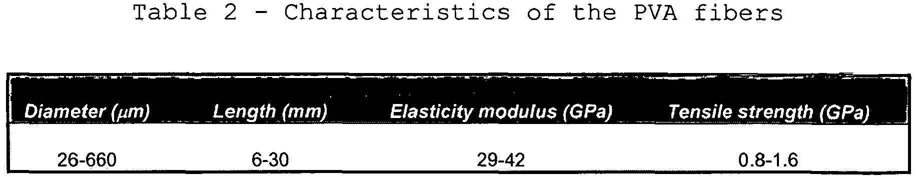

The microspheres are preferably glass microspheres and their use is aimed at reducing the weight/density of the panel, as well as improving its acoustic and thermal behaviour. The characteristics of the glass microspheres shall be the following:

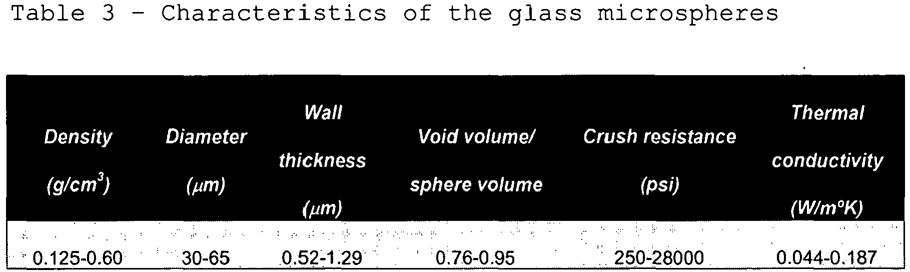

The water to be used shall be clean (colourless and odourless), preferably drinking water, free from oils or other impurities susceptible of contaminating the colour of the concrete, and comply with the provisions of the EN 1008A.

The pigments which are appropriate for the manufacture of the said mixture are inorganic pigments.

The main characteristics to be obtained are the ones listed in the following table:

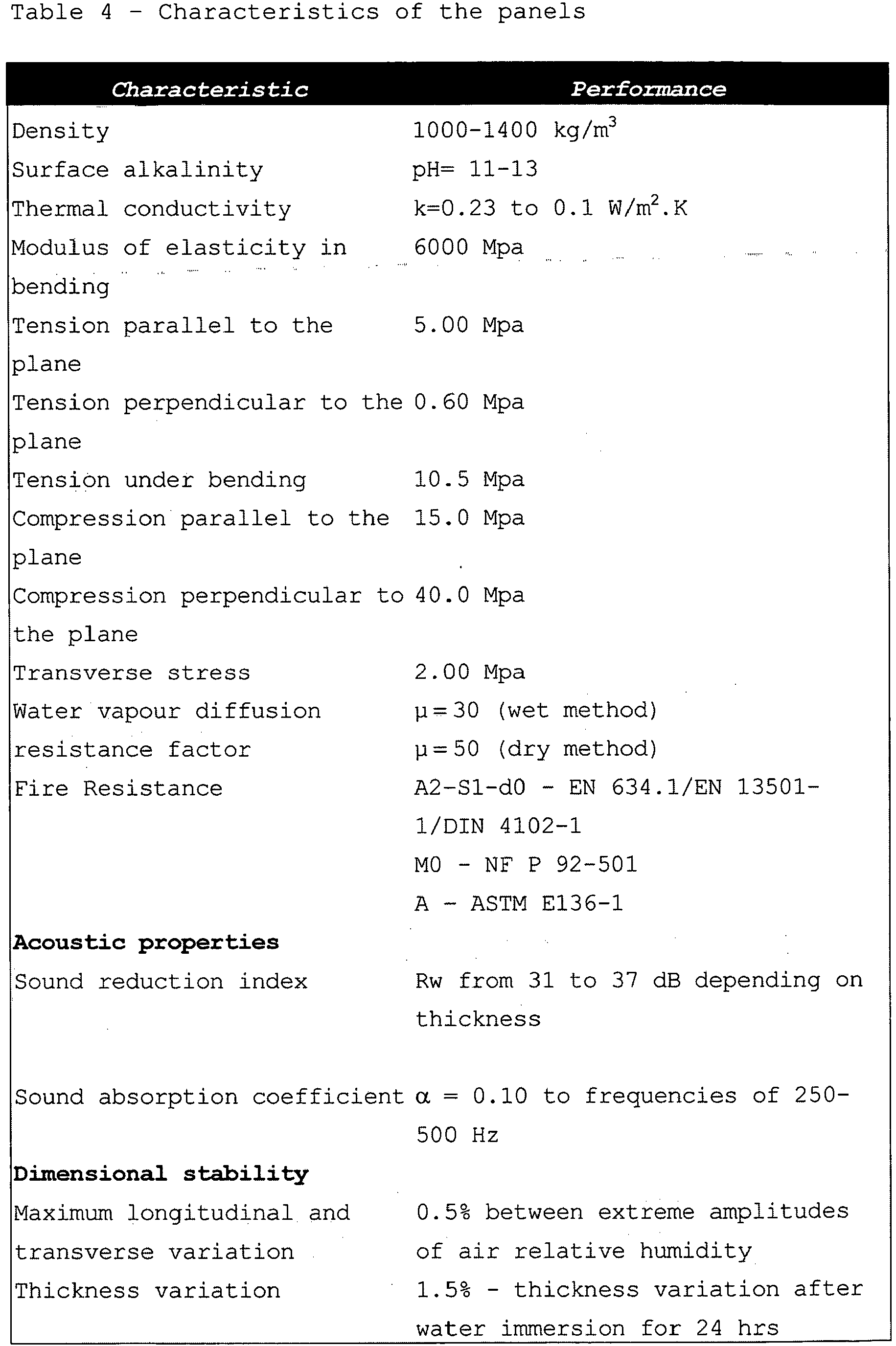

### Examples

### Example 1

| **Step** | **Component** | **Volume %** |
|---|---|---|
| 1 | Pinewood chips (2/3<1 mm and 1/3 [1;4] mm) | 17.4 |
| 2 | Aluminium sulphate solution with density of 1.07 g/cm³ | 3.2 |
| 3 | Sodium silicate solution with density of 1.13 g/cm³ | 7.5 |
| 4 | Grey cement CEM II/A-L 42,5R | 29.1 |
| 5 | PVA Fibers KURALON KII KF 1000 | 2.6 |
| 6 | Glass Microspheres K46 | 40.1 |

### Manufacturing steps:

The logs of wood are reduced into chips. The latter are thinned and divided into larger chips with 1 to 4 mm and thinner chips with a thickness lower than 1 mm. The chips are introduced in the mixer wherein after 30 seconds half of the water is introduced and after another period of 30 seconds, the other half of water is added. Again after 30 seconds, the aluminium sulphate solution is introduced and then, after 60 seconds, the sodium silicate solution is added.

The cement, PVA fibers and glass microspheres are premixed for 60 seconds and then added to the remaining components in the main mixer.

The mixture's conformation step is started, in which the said mixture is distributed with an even thickness over steel plates, thus forming a mattress. A stack of alternate plates and mattresses is formed with a number of stages according to the thickness of the boards to be manufactured. The stack is pressed and introduced in a hardening chamber, in which, under the effect of pressure, temperature and humidity and length of stay, it will gain the required strength in order to be handled.

This set of boards is decompressed and the boards are separated from the plates. The panels are subjected to a precut operation and subsequently they are stacked and left to mature in a covered park. After maturation, the boards are introduced in the drying tunnel in order to remove the excess moisture.

At the final step, the boards are cut to the desired size and treated in the surface.

### Example 2

| **Step** | **Component** | **Volume %** |
|---|---|---|
| 1 | Pinewood chips (2/3<1 mm and 1/3 [1;4] mm) | 29.1 |
| 2 | Aluminium sulphate solution with density of 1.07 g/cm³ | 3.2 |
| 3 | Sodium silicate solution with density of 1.13 g/cm³ | 7.5 |
| 4 | Grey cement CEM II/A-L 42,5R | 29.1 |
| 5 | Limestone filler < 125 µm | 12.1 |
| 6 | PVA Fibers KURALON KII KF 1000 | 2.6 |
| 7 | Glass microspheres K46 | 28.0 |

### Manufacturing steps:

The logs of wood are reduced into chips. The latter are thinned and divided into larger chips with 1 to 4 mm and thinner chips with a thickness lower than 1 mm. The chips are introduced in the mixer wherein after 30 seconds half of the water is introduced and after another period of 30 seconds, the other half of water is added. Again after 30 seconds, the aluminium sulphate solution is introduced and then, after 60 seconds, the sodium silicate solution is added.

The cement, limestone filler, PVA fibers and glass microspheres are firstly premixed for 60 seconds and then added to the remaining components in the main mixer.

The mixture's conformation step is started, in which the said mixture is distributed with an even thickness over steel plates, thus forming a mattress. A stack of alternate plates and mattresses is formed with a number of stages according to the thickness of the boards to be manufactured. The stack is pressed and introduced in a hardening chamber, in which, under the effect of pressure, temperature and humidity and length of stay, it will gain the required strength in order to be handled.

This set of boards is decompressed and the boards are separated from the plates. The panels are subjected to a precut operation and subsequently they are stacked and left to mature in a covered park. After maturation, the boards are introduced in the drying tunnel in order to remove the excess moisture.

At the final step, the boards are cut to the desired size and treated in the surface.

### Applications

Hereinafter are some examples of application for the cement-wood/PVA boards, selected from the following:
- Coating and isolation of façades
- Building of (inner or outer) walls.
- (inner or outer) Pavements.
- (inner or outer) Ceilings.
- Roofings.
- Interior decoration.
- Lost formwork and multiple other usages in building works.
- Sound barriers.
- Street furniture.

### Façades:

The use of this type of panels in façades offers several benefits due to the fact that it is a building material which can be used on outer spaces as well, with a good behaviour while enduring sun exposure, wet and dry cycles of rainwater, freeze and thaw cycles, and also due to its acoustic and mechanical strengths, in addition to its easy application and workability, which enables it to be applied as is, or a finishing can be adopted such as painting or coating with ceramic materials.

### Walls:

Another possible application is for the purpose of building structural or dividing walls, both in inner and outer spaces.

Its characteristics of mechanical strength, thermal strength and resistance to fire action, when applied with a support and fixing system, may represent a good solution.

In effect, the mechanical strength, durability and easy maintenance of the panels make them an excellent solution for the coating of inner spaces in buildings with high affluence of people (public buildings). On the other hand, inner wet areas can also be suitable spaces for using this type of panel due to its good behaviour concerning humidity, such as in the case of bathing facilities and sanitary installations in general.

### Pavements:

The excellent features of mechanical strength, resistance to airborne sounds and percussion sounds, thermal strength, resistance to fire action, as well as to fungi, termites and other microorganisms, allow them to satisfy the specific requirements of pavements construction, when applied in an appropriate support system.

### Ceilings:

Another possibility consists in the use of these panels as false ceilings, wherein excellent results can be obtained as regards durability and aesthetic aspects.

### Roofings:

Being a non-deteriorable material when exposed to outer environments, it can be used as the finishing final coating, which naturally requires the implementation of a damp proofing system in order to ensure it remains watertight.

### Lost formwork:

Its characteristics of rigidity, resistance and durability will allow this panel to be used in the field of lost formworks.

## Claims

1. Portland cement, wood particles and light weight aggregates-based composite panel, reinforced with polyvinyl alcohol fibers, **characterized in that** it comprises, in volumetric percentage relatively to the dry material, the following composition:
(a) 20 to 50% of white or grey Portland cement;
(b) 5 to 50% of debarked resinous wood particles;
(c) 0.1 to 10% of a surface accelerator;
(d) 0.1 to 20% of aluminium sulphate solution;
(e) 2 to 50% of limestone filler;
(f) 0.5 to 20% of PVA fibers;
(g) 0.1 to 50% of light weight aggregates; and, optionally,
(h) 0.1 to 15% of inorganic pigments.

2. A composite panel according to claim 1, **characterized in that** the component (a) is included in a volume percentage of the dry material from 25 to 35%.

3. A composite panel according to claim 1 or 2, **characterized in that** the component (b) is included in a volume percentage of the dry material from 10 to 25%.

4. A composite panel according to claim 3, **characterized in that** the component (b) is in the form of chips with a thickness from 0.25 to 0.32 mm.

5. A composite panel according to claims 3 or 4, **characterized in that** 50 to 70% of the wood chips have a length < 1 mm and 46 to 26% of the wood chips have a length from 1 to 4 mm.

6. A composite panel according to any of claims 3 to 5, **characterized in that** the wood chips are from pinewood.

7. A composite panel according to any of claims 1 to 6, **characterized in that** the component (c) is a sodium silicate solution with a density ranging from 1.10 to 1.15 g/cm³ and a SiO₂/Na₂O ratio from 3.19 to 3.53.

8. A composite panel according to any of claims 1 to 7, **characterized in that** the component (d) has a density from 1.05 to 1.10 g/cm³.

9. A composite panel according to any of claims 1 to 8, **characterized in that** the component (e) has a granulometry lower than 125 µm and a carbonate content higher than 92%.

10. A composite panel according to any of claims 1 to 9, **characterized in that** the component (f) is comprised of PVA fibers with a diameter from 26 to 660 µm and length from 6 to 30 mm.

11. A composite panel according to any of claims 1 to 10, **characterized in that** the component (g) is comprised of glass microspheres with a diameter from 30 to 65 µm, density from 0.125 to 0.60 g/cm³, thermal conductivity from 0.044 to 0.187 W/m.°K and air volume/sphere volume ratio from 0.76 to 0.95.

12. A composite panel according to any of claims 1 to 11, **characterized in that** the component (h) is comprised of metal oxide pigments.
